# FASCICULE DE BREVET EUROPEEN

(11) **EP 1 635 679 B1**
(45) Date de publication et mention de la délivrance du brevet: **07.05.2008**
(21) Numéro de dépôt: 04736915.2
(22) Date de dépôt: 16.06.2004
(51) Int. Cl.: A47J 31/00, A47J 31/053

(54) **DISPOSITIF DE PRODUCTION DE BOISSON PAR INFUSION**
VORRICHTUNG ZUR HERSTELLUNG VON INFUSIONSGETRÄNKEN
DEVICE FOR PRODUCTION OF A BEVERAGE BY INFUSION

(30) Priorité: 25.06.2003 FR 0350254
(43) Date de publication de la demande: 22.03.2006
(73) Titulaire: COMPAGNIE MEDITERRANEENNE DES CAFES S.A., 06510 Carros (FR)
(72) Inventeur: BLANC, Jean-Pierre,c/o Offi. Medit. de Brevets, F-06000 Nice (FR)
(74) Mandataire: Decobert, Jean-Pascal
(86) Numéro de dépôt international: PCT/EP2004/051137
(87) Numéro de publication internationale: WO 2004/112553

(56) Documents cités:
- EP-A- 1 264 568
- US-A- 5 312 637

## Description

La présente invention concerne un dispositif de production de boisson par infusion ainsi qu'une machine à café équipée d'un tel dispositif.

L'invention trouvera son application dans le domaine de la fabrication de machines à café du type à production de boissons individuelles ou en plus larges quantités, à usage hôtelier ou professionnel. En particulier, l'invention s'applique notamment aux machines à café utilisant des conditionnements de café moulu sous forme de doses prêtes à l'utilisation telles que les doses prévues dans le document WO-A-95/07041.

On connaît du document US-A-5 312 637 une machine à café disposant d'une chambre d'infusion et d'un circuit d'injection d'eau chaude au travers de la chambre d'infusion. La boisson ainsi produite par infusion est évacuée par une sortie. En outre, ce document présente un circuit de retour de la boisson depuis la portion de sortie jusqu'à l'entrée de la chambre afin de réaliser plusieurs infusions successives.

Un inconvénient de la machine selon cette antériorité est que la qualité de l'extraction diminue fortement après le premier passage de liquide dans la chambre d'infusion. L'opération de recirculation s'avère donc peu efficace pour extraire l'intégralité des arômes contenus dans la mouture.

La présente invention permet de remédier à cet inconvénient et présente, pour ce faire, un dispositif de production de boisson ainsi qu'une machine à café améliorée.

A cet effet, selon l'invention, la circulation d'eau chaude dans la chambre d'infusion peut s'effectuer dans les deux sens. Cette inversion permet de mieux répartir l'eau chaude s'écoulant dans la chambre d'infusion afin d'extraire la plus grande partie des composants aromatiques souhaités.

On notera que, dans les dispositifs existants et en particulier dans celui de US-A-5 312 637, la mouture de café a fortement tendance à se tasser après la première circulation d'eau, et ce d'autant plus que la pression d'extraction est élevée.

En outre, lors de la première circulation dans la chambre d'infusion, l'eau a tendance à se créer un chemin préféré (notamment suivant la répartition de la mouture dans la chambre, les bords de la chambre d'infusion et le ou les points d'injection d'eau dans la chambre d'infusion). Le chemin choisi par l'eau lors de la première circulation a tendance à être repris lors des circulations suivantes.

Au contraire, la présente invention permet d'éviter cette tendance de façon à mieux répartir l'écoulement de l'eau au travers de la chambre d'infusion.

On obtient ainsi une extraction optimisée pouvant être plus rapide et permettant de délivrer au maximum les arômes contenus dans la mouture.

D'autres buts et avantages apparaîtront au cours de la description qui suit d'un mode préféré de réalisation de l'invention qui n'est cependant pas limitatif.

La présente invention concerne un dispositif de production de boisson par infusion de mouture d'une substance à infuser, comportant une chambre d'infusion apte à recevoir la mouture, un circuit d'eau chaude traversant ladite chambre d'infusion et des moyens de mise en circulation de l'eau chaude dans le circuit. Selon l'invention, ce dispositif présente des moyens comme definis dans la revendication 1 pour inverser la circulation d'eau chaude au travers de la chambre d'infusion.

Suivant des possibilités préférées mais non limitatives, ce dispositif est tel que :
- le circuit d'eau chaude comprend un circuit d'extraction traversant la chambre d'infusion et un circuit périphérique parallèle au circuit d'extraction entre une vanne d' entrée, en amont de la chambre d'infusion, et une vanne de sortie, en aval de la chambre d'infusion, lesdites vannes étant configurées pour permettre la circulation en circuit fermé dans le circuit d'extraction et le circuit périphérique,
- la vanne d'entrée possède une voie connectée à l'alimentation en eau chaude,
- la vanne de sortie possède une voie connectée à la sortie de boisson,
- le circuit d'extraction et le circuit périphérique présentent globalement un volume correspondant à celui de la boisson à produire.

L'invention concerne également une machine à café utilisable avec des conditionnements de café moulu caractérisée par le fait qu'elle comporte un dispositif selon l'invention.

La présente invention concerne aussi un procédé de production de boisson par infusion de mouture d'une substance à infuser, dans lequel on introduit la mouture dans une chambre d'infusion et on fait circuler de l'eau chaude au travers de ladite chambre d'infusion, caractérisé par le fait que, au cours de la production de boisson, on stoppe la circulation d'eau chaude en cours et on inverse le sens de circulation au travers de la chambre d'infusion.

Les dessins ci-joints sont donnés à titre d'exemples et ne sont pas limitatifs de l'invention. Ils représentent seulement un mode de réalisation de l'invention et permettront de la comprendre aisément.

La figure 1 schématise un mode de réalisation de la configuration du dispositif de l'invention avec un premier sens de circulation.

La figure 2 illustre ce mode de réalisation dans un deuxième sens de circulation de l'eau.

Pour la suite de la description, on décrit, en référence aux dessins, un mode de réalisation de l'invention utilisant des conditionnements 1 se présentant sous forme de dosettes renfermant la mouture. En particulier, on pourra utiliser des dosettes du type présenté dans la publication WO-A- 95/07041. On pourra aussi utiliser des dosettes sans armature périphérique, moins rigide ou encore des capsules. Bien entendu, l'invention, s'applique également à de la mouture non emballée.

De façon préférée, la chambre d'infusion comporte deux parties 3, 4 mobiles en rapprochement et en éloignement et/ou en rotation de façon à ouvrir et fermer la chambre d'infusion suivant les phases de fonctionnement. Concernant ces mobilités, on fait ici explicitement référence aux mobilités décrites dans les documents WO-A-95/07041, WO-A 95/17121 ou encore aux publications WO-A 00/38558 et WO-A 00/44268. Les phases d'introduction, d'éjection ainsi que les phases d'ouverture ou de fermeture de la chambre pourront être conformes à celles présentées dans ces antériorités.

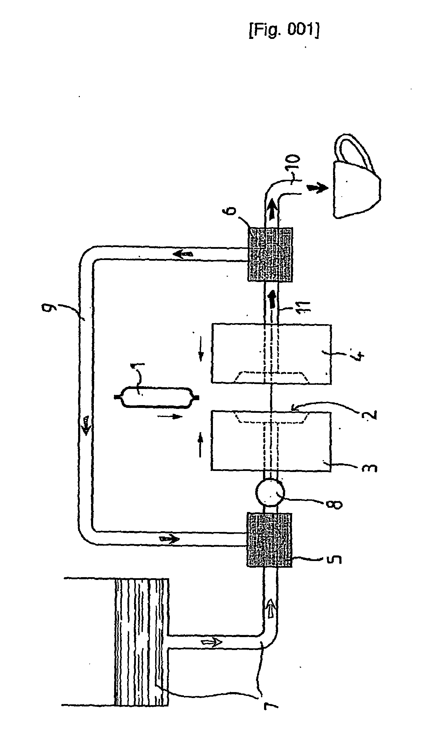

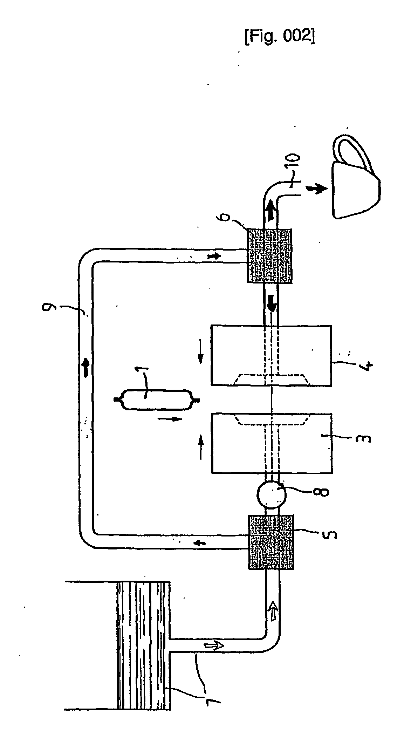

On a représenté en figures 1 et 2 le cas de deux parties 3, 4 aptes à former chacune une portion du volume de la chambre d'infusion 2 et aptes à être rapprochées ou éloignées l'une de l'autre par un mouvement de translation commandé pour ouvrir et fermer la chambre d'infusion 2.

On a également représenté un circuit d'eau chaude dont une partie, ici dénommée circuit d'extraction 11, traverse la chambre d'infusion 2. En amont du circuit d'extraction 11, le circuit d'eau chaude est relié à une alimentation en eau chaude 7 ici purement schématisée pour l'explication. On pourra utiliser un système conventionnel d'alimentation en eau chaude comprenant un réservoir d'eau froide, une chaudière et une sortie de la chaudière apte à alimenter en eau chaude le circuit d'injection.

Toujours de façon conventionnelle, le circuit comporte une partie de sortie 10 apte à délivrer la boisson produite.

Selon l'invention, des moyens sont présents pour inverser la circulation d'eau chaude au travers de la chambre d'infusion.

Selon l'invention, ces moyens sont réalisés par une pompe 8 placée dans le circuit d'eau chaude et apte à être commandée dans les deux sens de fonctionnement pour inverser la circulation.

Comme représenté à titre indicatif, la pompe 8 est positionnée en amont de la chambre d'infusion 2. Sa commande peut être manuelle (l'utilisateur détermine par un interrupteur le sens de circulation de l'eau) ou encore automatisée.

Dans le cas illustré, le circuit d'eau comprend outre le circuit d'extraction 11, un circuit périphérique repéré 9 apte à constituer une portion de circulation parallèle au circuit d'extraction 11. Les parties 11 et 9 du circuit d'eau se rejoignent en amont de la chambre d'infusion 2 et en aval de ladite chambre 2. Plus précisément, une vanne d'entrée 5 est prévue pour relier le circuit d'extraction 11 et le circuit périphérique 9 ainsi que pour connecter l'alimentation en eau chaude 7. En aval de la chambre d'infusion 2, une vanne de sortie 6 est présente afin de relier le circuit d'extraction 11, le circuit périphérique 9 et la sortie d'évacuation de la boisson 10.

Toujours de façon préférée, le volume global du circuit d'extraction 11 et du circuit périphérique 9 présente sensiblement un volume équivalent à celui de la boisson à produire.

On décrit ci-après une possibilité de fonctionnement du dispositif de l'invention.

Tel que représenté en figure 1, la mise en circulation de l'eau chaude depuis l'alimentation 7 est produite par l'actionnement de la pompe 8 de façon à produire une circulation au travers de la chambre d'infusion 2 dans le sens de la flèche indiquée dans le circuit d'extraction 11 à la figure 1. Les vannes 5 et 6 sont alors configurées pour orienter la boisson ainsi partiellement produite dans le circuit périphérique 9.

La vanne 6 est telle que la sortie 10 n'est pas ouverte. En configurant les vannes 5 et 6 de façon à constituer un circuit fermé avec le circuit d'extraction 11 et le circuit périphérique 9, on peut opérer une circulation à plusieurs reprises dans la chambre d'infusion 2. Par ailleurs, par inversion du sens de la pompe 8, cette circulation peut s'opérer en sens inverse.

Lorsque les recirculations ont été opérées, la vanne 6 est ouverte en direction de la sortie 10 de façon à évacuer la boisson.

Le résultat de cette inversion est présenté en figure 2.

Par commande des vannes 5, 6 et de la pompe 8, on peut aisément définir le nombre de circulation à opérer ainsi que leur sens. Des cycles d'inversion peuvent également être produits.

REFERENCES
1. Conditionnement
2. Chambre d'infusion
3. Partie mobile
4. Partie mobile
5. Vanne d'entrée
6. Vanne de sortie
7. Alimentation en eau
8. Pompe
9. Circuit périphérique
10. Sortie de boisson
11. Circuit d'extraction

## Revendications

1. Dispositif de production de boisson par infusion de mouture d'une substance à infuser, comportant une chambre d'infusion (2) apte à recevoir la mouture, un circuit d'eau chaude traversant ladite chambre d'infusion (2) et des moyens de mise en circulation de l'eau chaude dans le circuit, les moyens de mise en circulation étant configurés de sorte à inverser la circulation d'eau chaude au travers de la chambre d'infusion (2) au cours de la production de boisson, **caractérisé par le fait**
**que** les moyens de mise en circulation sont une pompe réversible (8) dont le sens de fonctionnement est commandé pour former les moyens pour inverser la circulation d'eau chaude au travers de la chambre d'infusion (2).

2. Dispositif selon la revendication 1 **caractérisé par le fait**
**que** le circuit d'eau chaude comprend un circuit d'extraction (11) traversant la chambre d'infusion (2) et un circuit périphérique (9) parallèle au circuit d'extraction (11) entre une vanne d'entrée (5), en amont de la chambre d'infusion (2), et une vanne de sortie (6), en aval de la chambre d'infusion (2), lesdites vannes (5, 6) étant configurées pour permettre la circulation en circuit fermé dans le circuit d'extraction (11) et le circuit périphérique (9).

3. Dispositif selon la revendication 2 **caractérisé par le fait**
**que** la vanne d'entrée (5) possède une voie connectée à l'alimentation en eau chaude (7).

4. Dispositif selon la revendication 3 **caractérisé par le fait**
**que** la vanne de sortie (6) possède une voie connectée à la sortie de boisson (10).

5. Dispositif selon la revendication 2 **caractérisé par le fait**
**que** le circuit d'extraction (11) et le circuit périphérique (9) présentent globalement un volume correspondant à celui de la boisson à produire.

6. Machine à café utilisable avec des conditionnements (1) de café moulu **caractérisée par le fait**
**qu'**elle comporte un dispositif selon l'une quelconque des revendications 1 à 5.

7. Procédé de production de boisson par infusion de mouture d'une substance à infuser, dans lequel on introduit la mouture dans une chambre d'infusion (2) et on fait circuler de l'eau chaude au travers de ladite chambre d'infusion (2),
**caractérisé par le fait que**, au cours de la production de boisson, on stoppe la circulation d'eau chaude en cours et on inverse le sens de circulation au travers de la chambre d'infusion (2).

## Claims

1. Device for production of a beverage by infusion of a ground product, comprising an infusion chamber (2) able to receive the ground product, a circuit of hot water crossing aforementioned infusion chamber (2) and means for circulating the hot water in the circuit, circulation means being configured so that hot water can be circulated through infusion chamber (2) during beverage production in the opposite direction, **characterized in that** the circulation means are a reversible pump (8) whose direction of operation is controlled so as to form the means for reversing hot water circulation through infusion chamber (2).

2. Device according to claim 1 **characterized in that**
the hot water circuit includes an extraction circuit (11) crossing infusion chamber (2) and a peripheral circuit (9) parallel to extraction circuit (11) between an inlet valve (5), upstream of infusion chamber (2), and an outlet valve (6), downstream of infusion chamber (2), aforementioned valves (5, 6) being configured to allow closed loop circulation in extraction circuit (11) and peripheral circuit (9).

3. Device according to claim 2 **characterized in that** inlet valve (5) has a line connected to hot water supply (7).

4. Device according to claim 3 **characterized in that** outlet valve (6) has a line connected to beverage outlet (10).

5. Device according to claim 2 **characterized in that** extraction circuit (11) and peripheral circuit (9) have an overall volume corresponding to that of the beverage to be produced.

6. Coffee machine for use with prepackaged doses (1) of ground coffee **characterized in that** it includes a device according to any of claims 1 to 5.

7. Process for producing a beverage by infusion of a ground product, in which the ground product is introduced into an infusion chamber (2) and hot water is circulated through the aforementioned infusion chamber (2), **characterized in that** during the production of the beverage, the circulation of hot water is stopped and the direction of circulation through infusion chamber (2) is reversed.

## Patentansprüche

1. Vorrichtung zur Herstellung von Getränken durch Brühen einer mehlförmigen zu brühenden Substanz, mit einer Brühkammer(2) zur Aufnahme des Mehls, mit einem Warmwasserkreislauf, der die Brühkammer (2) durchquert, und Mitteln zur Umwälzung des Warmwassers in dem Kreislauf, wobei die Mittel zur Umwälzung so gestaltet sind, dass die Strömungsrichtung des Warmwassers durch die Brühkammer (2) bei der Herstellung des Getränks umgekehrt wird, **gekennzeichnet dadurch, dass** die Mittel zur Umwälzung aus einer Umkehrpumpe (8) bestehen, deren Betriebsrichtung so gesteuert wird, dass ein Mittel zum Umkehr der Strömungsrichtung des Warmwassers durch die Brühkammer (2) gebildet wird.

2. Vorrichtung gemäß Patentanspruch 1, **gekennzeichnet dadurch, dass** der Warmwasserkreislauf aus einem Extraktionskreislauf (11) besteht, der die Brühkammer (2) durchquert, und einem, parallel zum Extraktionskreislauf (11) angeordneten Peripheriekreislauf (9) zwischen einem Eintrittsventil (5) vor der Brühkammer (2) und einem Austrittsventil (6) nach der Brühkammer (2), wobei die Ventile (5, 6) so gestaltet sind, dass im Extraktionskreislauf (11) und im Peripheriekreislauf (9) eine Strömung in geschlossenem Kreislauf möglich ist.

3. Vorrichtung gemäß Patentanspruch 2, **gekennzeichnet dadurch, dass** das Eintrittsventil (5) einen Anschluss zur Warmwasserversorgung (7) besitzt.

4. Vorrichtung gemäß Patentanspruch 3, **gekennzeichnet dadurch, dass** das Austrittsventil (6) einen Anschluss zur Getränkeausgabe (10) besitzt.

5. Vorrichtung gemäß Patentanspruch 2, **gekennzeichnet dadurch, dass** der Extraktionskreislauf (11) und der Peripheriekreislauf (9) insgesamt ein Volumen bilden, das dem des herzustellenden Getränks entspricht.

6. Kaffeemaschine zur Verwendung mit Packungen (1) gemahlenen Kaffees, **gekennzeichnet dadurch, dass** sie eine Vorrichtung gemäß einem der Patentansprüche 1 bis 5 besitzt.

7. Verfahren zur Herstellung von Getränken durch Brühen einer zu brühenden Substanz, bei welchem man das Mehl in eine Brühkammer (2) einführt und Warmwasser durch die genannte Brühkammer (2) zirkulieren lässt, **gekennzeichnet dadurch, dass** während der Herstellung des Getränks die aktuelle Warmwasserumwälzrichtung unterbrochen und die Strömungsrichtung durch die Brühkammer (2) umgekehrt wird.
